# FASCICULE DE BREVET EUROPEEN

(11) **EP 1 085 752 B1**
(45) Date de publication et mention de la délivrance du brevet: **11.04.2007**
(21) Numéro de dépôt: 00402533.4
(22) Date de dépôt: 13.09.2000
(51) Int. Cl.: H04N 5/44

(54) **Procédé de réglage d'un téléviseur avec une télécommande configurable**
Verfahren zur Einstellung eines Fernsehempfängers mit einer konfigurierbaren Fernbedienung
Method for setting a TV receiver with a configurable remote control

(30) Priorité: 16.09.1999 FR 9911567
(43) Date de publication de la demande: 21.03.2001
(73) Titulaire: SAGEM Communication, 75015 Paris (FR)
(72) Inventeur: Cuoq, Jean-Noel, 92150 Suresnes (FR)
(74) Mandataire: Schmit, Christian Norbert Marie

(56) Documents cités:
- WO-A-94/21081
- WO-A-97/13359
- WO-A-99/04568
- DE-A- 19 520 180
- US-A- 5 410 326

## Description

La présente invention a pour objet un téléviseur avec une télécommande configurable. Elle a aussi pour objet un procédé de réglage associé. Elle s'applique plus particulièrement aux récepteurs de télévision numériques reliés à un réseau, ce réseau ayant pour fonction principale de fournir des programmes à visualiser sur un écran du téléviseur. Le but de l'invention est de permettre de régler dynamiquement une association entre une touche de la télécommande et une commande à exécuter. On rend ainsi, une utilisation universelle d'une télécommande. De plus, on évite d'avoir à réaliser une télécommande en autant de variantes qu'il peut exister de combinaisons de commandes possibles.

Actuellement, chaque téléviseur est produit avec une télécommande. Cette télécommande comporte un ensemble de touches. Chaque touche est associée avec une commande générale et/ou avec une commande spéciale. Une commande générale est une commande permettant plus particulièrement de régler le téléviseur. Par exemple, un numéro de canal est une commande générale car elle permet de régler un syntoniseur du téléviseur sur un canal demandé. Par contre, un appel à une fonction de télétexte sera considéré comme une commande spéciale car non nécessaire à un bon fonctionnement du téléviseur. Plus généralement, une commande spéciale se distingue d'une commande générale en ce sens qu'elle concerne plus particulièrement une fonction d'agrément. Cependant, on considère qu'un appel à un menu est une commande générale car le menu permet d'accéder à des fonctions de réglage du téléviseur.

Ainsi, cet ensemble de touches peut être séparé en un premier groupe de touches associées à des commandes générales et un deuxième groupe de touches associées à des commandes spéciales. En outre, chaque touche d'une télécommande est généralement repérée visuellement par un symbole. Ce symbole est un pictogramme. A chaque commande générale ou spéciale est associée un pictogramme. Selon un téléviseur considéré et selon un endroit où est utilisé ce téléviseur, le groupe de touches spéciales n'est pas associé avec un même groupe de commandes spéciales.

Une telle réalisation présente des problèmes. En effet, une association entre le deuxième groupe de touches et les commandes spéciales est permanente ou tout du moins peu encline au changement. En effet, une association entre une touche, identifiée par un pictogramme, et une commande est en général permanente. En conséquence, une telle télécommande peut difficilement évoluer en même temps que l'évolution des commandes spéciales d'un deuxième groupe de touches fournies par le réseau. Ainsi, lorsqu'une nouvelle commande est disponible, un utilisateur du téléviseur doit pouvoir en demander l'exécution. Pour cela, une réalisation consisterait à détourner une fonction d'une touche déjà associée à une commande spéciale. Cependant, cette réalisation conduit vite à une situation de confusion où l'on ne sait plus quelle touche est encore correctement identifiée par un pictogramme.

L'invention permet de remédier à ces problèmes en proposant une télécommande configurable. Avec l'invention, on peut, dans un premier temps, associer temporairement une touche avec une première commande spéciale puis, dans un deuxième temps, associer cette même touche avec une deuxième commande spéciale à la place de la première commande spéciale. On permet ainsi d'avoir une télécommande présentant un fonctionnement universel puisqu'elle comporte des touches dont une identification est neutre. L'invention à donc pour objet

un procédé de réglage d'un téléviseur relié à un réseau d'un opérateur et commandé par une télécommande non programmable, tel que défini dans la revendication 1.

La présente invention sera mieux comprise à la lecture de la description qui suit et à l'examen des figures qui l'accompagne. Celles-ci ne sont présentées qu'à titre indicatif et nullement limitatif de l'invention, les figures montrent :
- figure 1 : Une représentation d'un récepteur reliée à une télécommande selon l'invention ;
- figure 2 : une représentation, sous une forme d'un organigramme, d'un fonctionnement du procédé de l'invention.

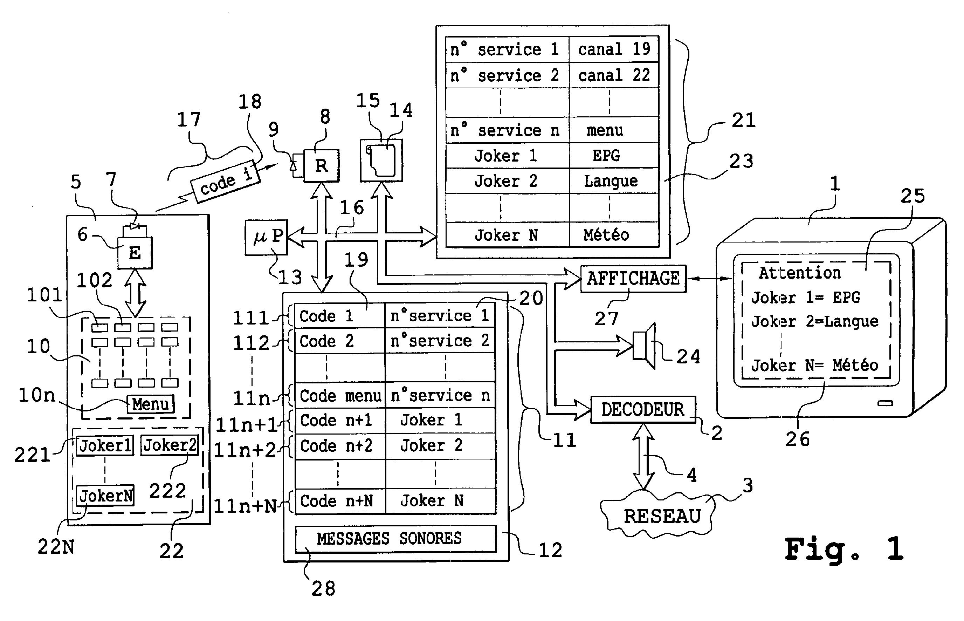

La figure 1 montre un récepteur 1 de télévision ou encore téléviseur 1. Ce téléviseur 1 comporte un décodeur 2 permettant de recevoir des messages d'un réseau 3 et de les décoder pour les transmettre au téléviseur 1 sous une forme compréhensible par ce dernier. Dans un exemple préféré, le réseau 3 est un réseau de télévision numérique. Le téléviseur 1 est donc un téléviseur numérique. Cependant, le téléviseur 1 pourrait être un téléviseur analogique relié à un réseau de télévision analogique. Le décodeur 2 est externe par rapport au téléviseur mais il pourrait très bien être interne. Ainsi, le décodeur 2 est relié au réseau 3 par une liaison 4 en général par câble coaxial ou par satellite. Le décodeur 2 comporte en conséquence des moyens de réception (non représentés) tel qu'un syntoniseur de fréquence permettant de régler un canal de réception. Un canal est généralement associé à une bande de fréquence repéré par une porteuse. Le téléviseur 1 est relié en outre à une télécommande 5. Cette télécommande 5 est muni d'un émetteur 6 de signaux généralement de type infrarouge par l'intermédiaire d'une diode 7 émettant des signaux infrarouges. Le téléviseur 1 comporte un récepteur 8 de signaux infrarouges, le récepteur 8 comportant pour cela une photodiode 9 par exemple.

La télécommande 5 comporte un premier ensemble 10 de touches 10 1, 10 2 à 10 n. Une touche 10 1 à 10 n permet de commander le téléviseur 1 à l'aide de commandes générales. Une commande générale est une commande qui permet notamment de régler le téléviseur 1. Ainsi, une telle commande générale, peut être relative à un numéro de canal. Une exécution de cette commande consiste donc à régler un synchroniseur (non représenté) du décodeur 2 pour recevoir des messages émis à travers le canal ainsi sélectionné.

En conséquence le téléviseur 1 comporte une table 11 de couples 11 1 à 11 n de transcodage permettant de déterminer quelle commande générale est associée avec quelle touche 10 1 à 10 n. Cette table 11 est mémorisée dans une mémoire 12 contrôlée par un microprocesseur 13 commandé par un programme 14 dans une mémoire de programmes 15, les différents éléments du téléviseur 1 étant reliés entre eux par un bus 16 de données, d'adresses et de commandes.

Un message 17 émis par l'émetteur 6 et reçu par le récepteur 8 comporte un code 18 d'identification d'une touche 10 1 à 10 n appuyée. En effet, chaque touche d'une télécommande telle que la télécommande 5 est associée à un code d'identification produit par l'émetteur 6. Ce code d'identification est compréhensible, ou encore décodable, par le récepteur 8 qui peut ainsi le mettre sous une forme numérique, c'est-à-dire sous une forme utilisable par le microprocesseur 13 et la mémoire 12. En conséquence, un code reçu par le récepteur 8, par exemple après un appui sur la touche 10 1, est mémorisé dans un premier champ 19 du couple 11. Le champ 19 est associé à un deuxième champ 20 dans lequel est mémorisé un code général relatif à une commande générale. Ce code général est mémorisé pendant une phase initiale de réglage du téléviseur. Cette phase initiale correspond généralement à une phase où on relie pour la première fois le décodeur 2 au réseau 3. Ainsi, lorsque le code d'identification de la touche 10 1 est reçu le microprocesseur 13 effectue une phase de recherche, dans la table 11, du champ comportant la valeur du code d'identification reçu. Une fois ce champ trouvé, par exemple le champ 19, le microprocesseur 13 effectue une opération de lecture du champ 20 correspondant pour déterminer le code général associé. La table 11 comporte donc un couple 11 1 à 11 n par touche 10 1 à 10 n respectivement.

Une commande générale associée à un deuxième champ est fournie par le réseau 3. En effet, lors d'un branchement du décodeur 2 pour recevoir des informations en provenance du réseau 3, on reçoit, parmi ces informations, une table 21. Dans le cas d'un réseau de télévision numérique tel que le réseau 3, la table 21 est une table dite table NIT (Network Information Table - Table d'information réseau en français). Cependant, une autre table 21 pourrait être utilisée dans le cas d'un réseau de télévision analogique voire d'un réseau de téléphonie mobile par exemple. Cette table 21, pouvant être transmise régulièrement par la suite, fournit toutes les commandes auxquelles peut répondre le réseau 3. Chaque commande de la table 21 est associée à un numéro de service. C'est ce numéro de service qui est mémorisé dans le deuxième champ de la table 11. Ainsi, lorsque le récepteur 8 reçoit un code d'identification le microprocesseur 13 détermine à quel numéro de service ce code est associé. Le microprocesseur 13 commande alors le téléviseur 1 à l'aide de la commande générale associée à ce numéro de service et fourni par la table 21.

Généralement, un numéro de service est associé avec un code d'identification d'une touche dont une identification visuelle, par un pictogramme, des touches représente la commande générale à exécuter. Ainsi, quel que soit le réseau 3 auquel le décodeur 2 est relié les commandes générales sont toutes associées au même numéro de service.

Dans l'invention, la télécommande 5 comporte un deuxième ensemble 22 de touches 22 1, 22 2 à 22 N. Chaque touche 22 1 à 22 N est identifiée par un pictogramme arbitraire. Un pictogramme arbitraire est une représentation qui ne permet pas d'identifier une commande d'exécuter telles que les pictogrammes utilisés pour repérer les touches 10 1 à 10 n. Les touches 22 1 à 22 N permettent quant à elles d'identifier une commande spéciale. Une commande spéciale est une commande permettant d'activer des services particuliers tels qu'un service EPG (Electronic Program Guide - Guide électronique de programme en français), un service de choix d'une langue d'un message reçu du réseau 3 ou encore d'un service de météorologie. On place ainsi dans la table 11 des couples 11 n+1 à 11 n+N de transcodage de codes spéciaux avec un premier champ tel que le champ 19 et un deuxième champ tel que le champ 20. On mémorise dans le premier champ couple 11 n+1 à 11 n+N, par exemple le couple 11 n+1, un code spécial associé à une touche de l'ensemble 22, par exemple la touche 22 1. On mémorise ensuite dans le deuxième champ du groupe 11 n+1 un code spécial relatif à une commande spéciale associée à la touche 22 1. En conséquence la table 21 comporte ce code spécial et une commande spéciale associée temporairement.

De plus, dans l'invention, on associe à tout moment dans le téléviseur 1 ce code spécial à une commande spéciale fournie par le réseau 3 en plus des commandes générales. En effet, les commandes générales sont utilisées pour régler le téléviseur 1 et sont donc appelées à ne plus être modifiées. Cependant, les commandes spéciales permettent de fournir des services dont une demande évolue au cours du temps. Ainsi, la table 21 est variable dans son contenu c'est-à-dire que les commandes spéciales peuvent être modifiées entre deux connexions au réseau 3. En conséquence, un opérateur du réseau 3 n'a plus qu'à associer un code spécial avec une autre commande spéciale. Lorsque le microprocesseur 13 détecte une différence entre la table NIT reçue depuis le réseau 3 et la table 21 mémorisée dans une mémoire 23, alors il met à jour la table 21 en conséquence.

Dans un exemple préféré, le microprocesseur 13 produit un message d'information indiquant une association entre une commande spéciale et une touche 22 1 à 22 N. Dans une première variante, ce message est produit sous forme d'un message sonore. Ce message sonore est donc transmis à un haut-parleur 24 par l'intermédiaire de moyens appropriés (non représentés) et connus. Dans une variante préférée, on produit le message d'information sous une forme visuelle. Pour cela le microprocesseur 13 commande un affichage d'un message 25 visuel sur un écran 26 du téléviseur 1 à l'aide d'un dispositif 27 de gestion d'un affichage. Ce dispositif 27 comporte notamment une mémoire vidéo et des moyens de contrôle de l'écran 26. Ce message 25 indique les associations effectuées entre une touche 22 1 à 22 N et une commande spéciale. Par exemple, un pictogramme arbitraire peut être le terme "Joker1" pour la touche 22 1. En conséquence le message 25 comporte une information du type "Joker1 = EPG". La production du message d'information tel que le message 25 peut être enclenchée lorsque le réseau 3 envoie de nouvelles commandes spéciales ou lorsque le microprocesseur 13 détecte un appui sur une touche 22 1 à 22 N, une association entre une de ces touches et une commande spéciale ayant été changée avant cet appui. Dans une autre variante, le message d'information pourrait très bien être à la fois visuel et sonore. Dans le cas d'un message sonore on mémorise dans la mémoire 12 à l'emplacement 28 un message sonore sous une forme numérique à diffuser acoustiquement en fonction des différentes commandes spéciales pouvant exister par exemple. La génération d'un message sonore est commandée par le programme 14 qui comporte les algorithmes nécessaires pour réaliser de la synthèse vocale de ce message sonore. De même, les moyens autorisant l'affichage du message 25 sont des messages numérisés et pouvant être aussi mémorisés à l'emplacement 28 avec les messages sonores.

L'invention peut être utilisée dans tout dispositif commandé par un clavier à partir de commandes générales et de commandes spéciales. Ceci est notamment le cas d'un téléphone mobile dans lequel les commandes spéciales, permettant d'accéder à divers services, telle qu'une commande spéciale permettant de se connecter au réseau Internet. Ainsi, avec l'invention, on permet d'associer les touches d'un téléphone mobile avec de nouvelles commandes spéciales et ce de manière transparente pour un utilisateur. Dans un exemple préféré, les nouveaux codes relatifs aux nouvelles commandes spéciales sont envoyés au téléphone mobile par l'intermédiaire de messages courts de type SMS (Short Messages Service en anglais pour service de messages courts en français).

Ainsi, un téléphone mobile relié à une station de base peut recevoir à tout moment un message SMS indiquant qu'une touche est associée avec une nouvelle commande spéciale. Cet envoi d'un message SMS au téléphone mobile peut très bien être conditionné par un type de service souscrit par l'utilisateur du téléphone mobile.

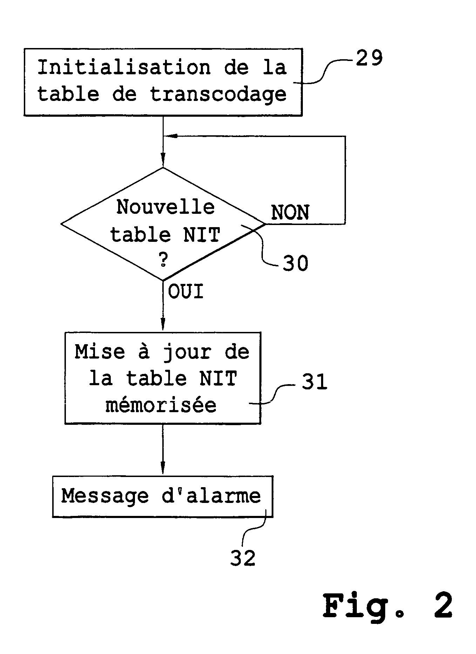

La figure 2 montre une représentation, sous une forme d'un organigramme, d'un fonctionnement du procédé de l'invention. Lors d'une étape 29, le décodeur reçoit la table 21 NIT permettant d'initialiser les deuxièmes champs de la table 11. La table 21 est mémorisée dans la mémoire 23 de sauvegarde. Lors d'une étape 30 de test, on attend la réception d'une nouvelle table NIT. Dans le cas où on reçoit une nouvelle table NIT, on remet alors à jour, dans une étape 31, la table 21 mémorisée dans la mémoire 23. Cette remise à jour n'a lieu que si, de manière préférée, il y a des différences entre la table reçue et la table 21. Pour chercher une différence, il suffit de contrôler une liste des commandes spéciales de la table 21 et une liste des commandes spéciales de la nouvelle table NIT. Les commandes spéciales supprimées sont ainsi replacées par de nouvelles commandes spéciales. Ainsi, si la table NIT indique une association entre une touche 22 1 à 22 N et une nouvelle commande spéciale alors il faut en avertir un utilisateur de la télécommande 5. En conséquence, on produit, dans une étape 32, un message d'alarme indiquant cette nouvelle association. Ce message d'alarme peut être visuel tel que le message 25 de la figure 1 ou sonore ou encore les deux.

## Revendications

1. - Procédé de réglage d'un téléviseur (1) relié à un réseau (3) d'un opérateur et commandé par une télécommande non programmable (5), la télécommande comportant un premier ensemble (10) de touches générales 10 1 à 10 n et un deuxième ensemble (22) de touches spéciales (22 1 à 22 N), ces touches permettant la télécommande du téléviseur par envoi avec cette télécommande de codes (18, 19) d'identification associés à ces touches, une touche générale lançant une commande générale et permettant de régler (canal 19) le téléviseur et une touche spéciale lançant une commande spéciale et permettant d'activer des services particuliers, **caractérisé en ce que** :
- on produit, dans le téléviseur, une table (11) de couples (11 1 à 11 n) de transcodage, avec un premier champ (19) et un deuxième champ (20), réalisant une transposition entre un code d'identification (19) d'une touche et un code (20) relatif à une commande (canal 19) à exécuter,
- on mémorise dans un premier champ (19) d'un premier couple (11 1) de transcodage un code d'identification d'une touche générale (10 1) du premier ensemble repéré par un pictogramme général,
- on mémorise dans un deuxième champ (20) du premier couple de transcodage un code relatif à une commande générale, ce code relatif à une commande générale étant mémorisé pendant une phase initiale de réglage du téléviseur,
- on mémorise dans un premier champ d'un deuxième couple (11 n+1) de transcodage un code d'identification d'une touche spéciale (22 1) du deuxième ensemble repéré par un pictogramme arbitraire (Joker),
- on mémorise dans un deuxième champ du deuxième couple de transcodage un code spécial relatif à une première commande spéciale, fournie par l'opérateur du réseau,
- on associe ainsi (21), dans un premier temps, cette touche spéciale du deuxième ensemble à cette première commande spéciale correspondant à un premier numéro de service,
- on associe, dans un deuxième temps, cette touche spéciale du deuxième ensemble à une deuxième commande spéciale, cette deuxième commande spéciale étant fournie, dans le deuxième temps, par l'opérateur du réseau et correspondant à un deuxième numéro de service.

2. - Procédé selon la revendication 1 **caractérisé en ce que** :
- on produit un message d'information indiquant une association entre une commande spéciale et une touche repérée par un pictogramme arbitraire.

3. - Procédé selon la revendication 2 **caractérisé en ce que** :
- on produit le message sous une forme d'un message sonore.

4. - Procédé selon l'une des revendications 2 ou 3 **caractérisé en ce que** :
- on produit le message d'information sous une forme visuelle (25).

5. - Procédé selon l'une des revendications 2 à 4 **caractérisé en ce que** :
- on produit le message lors d'un appui sur une touche dont une association avec une commande spéciale a été modifiée.

6. - Procédé selon l'une des revendications 1 à 5 **caractérisé en ce que** :
- on associe les commandes générales repérées par un pictogramme général à un même numéro de service.

7. - Utilisation du procédé selon l'une des revendications 1 à 6 dans un téléviseur.

8. - Utilisation du procédé selon l'une des revendications 1 à 6 **caractérisé en ce qu'**on modifie, entre deux connexions du téléviseur au réseau, le contenu d'une table d'information réseau pour modifier l'association d'une touche spéciale de la télécommande, dans un premier temps associée à un première commande spéciale, pour que, dans un deuxième temps, ladite touche spéciale soit associée à une deuxième commande spéciale, les commandes spéciales étant fournies par le réseau.

## Claims

1. Method for setting a television receiver (1) connected to a network (3) of an operator and controlled by a non-programmable remote control (5), the remote control comprising a first set (10) of general keys (10 1 to 10 n) and a second set (22) of special keys (22 1 to 22 N), these keys allowing remote control of the television receiver by sending with this remote control identification codes (18,19) associated with these keys, a general key issuing a general command and permitting setting (channel 19) of the television receiver and a special key issuing a special command and permitting activation of the particular services, **characterised in that**:
- a table (11) of transcoding combinations (11 1 to 11 n) is produced in the television receiver with a first field (19) and a second field (20), achieving a transposition between an identification code (19) of a key and a code (20) relating to a command (channel 19) to be executed,
- an identification code of a general key (10 1) of the first set marked by a general pictogram is stored in a first field (19) of a first transcoding combination (11 1),
- a code relating to a general command is stored in a second field (20) of the first transcoding combination, this code relating to a general command being stored during an initial phase of setting of the television receiver,
- an identification code of a special key (22 1) of the second set marked by an arbitrary pictogram (joker) is stored in a first field of a second transcoding combination (11 n+1),
- a special code relating to a first special command, supplied by the operator of the network, is stored in a second field of the second transcoding combination,
- thus (21) firstly this special key of the second set is associated with this first special command corresponding to a first service number,
- secondly this special key of the second set is associated with a second special command, this second special command being provided secondly by the operator of the network and corresponding to a second service number.

2. Method according to claim 1, **characterised in that**:
- an information message is produced indicating an association between a special command and a key marked by an arbitrary pictogram.

3. Method according to claim 2, **characterised in that**:
- the message is produced in a form of a sound message.

4. Method according to one of claims 2 or 3, **characterised in that**:
- the information message is produced in a visual form (25).

5. Method according to one of claims 2 to 4, **characterised in that**:
- the message is produced when pressing a key an association of which with a special command has been modified.

6. Method according to one of claims 1 to 5, **characterised in that**:
- the general commands marked by a general pictogram are associated with one and the same service number.

7. Use of the method according to one of claims 1 to 6 in a television receiver.

8. Use of the method according to one of claims 1 to 6, **characterised in that** the content of a network information table is modified between two connections of the television receiver to the network in order to modify the association of a special key of the remote control firstly associated with a first special command so that said special key is secondly associated with a second special command, the special commands being provided by the network.

## Patentansprüche

1. Verfahren zur Einstellung eines Fernsehempfängers (1), welcher mit einem Netz (3) eines Betreibers verbunden ist und mittels einer nicht programmierbaren Fernbedienung (5) bedient wird, wobei die Fernbedienung eine erste Gesamtheit (10) von allgemeinen Tasten (10 1 bis 10 n) und eine zweite Gesamtheit (22) von speziellen Tasten (22 1 bis 22 N) umfasst, wobei diese Tasten die Fernsteuerung des Fernsehempfängers durch Senden von zu diesen Tasten gehörenden Identifikationscodes (18, 19) mit der Fernbedienung ermöglichen, wobei eine allgemeine Taste einen allgemeinen Befehl erteilt und gestattet, den Fernsehempfänger einzustellen (Kanal 19), und eine spezielle Taste einen speziellen Befehl erteilt und gestattet, besondere Dienste zu aktivieren, **dadurch gekennzeichnet, dass**:
- in dem Fernsehempfänger, eine Tabelle (11) von Transkodierungspaaren (11 1 bis 11 n) erzeugt wird, und zwar mit einem ersten Feld (19) und einem zweiten Feld (20), wobei eine Transposition zwischen einem Identifikationscode (19) einer Taste und einem sich auf einen auszuführenden Befehl (Kanal 19) beziehenden Code (20) realisiert wird,
- in einem ersten Feld (19) eines ersten Transkodierungspaares (11 1) ein Identifikationscode einer allgemeinen Taste (10 1) der ersten Gesamtheit gespeichert wird, welche durch ein allgemeines Piktogramm **gekennzeichnet** ist,
- in einem zweiten Feld (20) des ersten Transkodierungspaares ein sich auf einen allgemeinen Befehl beziehender Code gespeichert wird, wobei dieser sich auf einen allgemeinen Befehl beziehende Code während einer Anfangsphase zur Einstellung des Fernsehempfängers gespeichert wird,
- in einem ersten Feld eines zweiten Transkodierungspaares (11 n+1) ein Identifikationscode einer speziellen Taste (22 1) der zweiten Gesamtheit gespeichert wird, welche durch ein arbiträres Piktogramm (Joker) **gekennzeichnet** ist,
- in einem zweiten Feld des zweiten Transkodierungspaares ein sich auf einen ersten speziellen Befehl beziehender spezieller Code gespeichert wird, welcher von dem Betreiber des Netzes geliefert wird,
- somit, zu einer ersten Zeit, diese spezielle Taste der zweiten Gesamtheit mit diesem ersten speziellen Befehl verbunden wird (21), welcher einer ersten Nummer eines Dienstes entspricht,
- zu einer zweiten Zeit, diese spezielle Taste der zweiten Gesamtheit mit einem zweiten speziellen Befehl verbunden wird, wobei dieser zweite spezielle Befehl, zu der zweiten Zeit, von dem Betreiber des Netzes geliefert wird und einer zweiten Nummer eines Dienstes entspricht.

2. Verfahren nach Anspruch 1, **dadurch gekennzeichnet, dass**:
- eine Informationsmitteilung erzeugt wird, welche eine Verbindung zwischen einem speziellen Befehl und einer Taste anzeigt, welche durch ein arbiträres Piktogramm **gekennzeichnet** ist.

3. Verfahren nach Anspruch 2, **dadurch gekennzeichnet, dass**:
die Mitteilung in Form einer Audiomitteilung erzeugt wird.

4. Verfahren nach einem der Ansprüche 2 oder 3, **dadurch gekennzeichnet, dass**:
- die Informationsmitteilung in einer visuellen Form (25) erzeugt wird.

5. Verfahren nach einem der Ansprüche 2 bis 4, **dadurch gekennzeichnet, dass**:
- die Mitteilung bei Druck auf eine Taste erzeugt wird, von welcher eine Verbindung mit einem speziellen Befehl modifiziert wurde.

6. Verfahren nach einem der Ansprüche 1 bis 5, **dadurch gekennzeichnet, dass**:
- die allgemeinen Befehle, welche durch ein allgemeines Piktogramm **gekennzeichnet** sind, mit einer gleichen Nummer eines Dienstes verbunden werden.

7. Verwendung des Verfahrens nach einem der Ansprüche 1 bis 6 bei einem Fernsehempfänger.

8. Verwendung des Verfahrens nach einem der Ansprüche 1 bis 6, **dadurch gekennzeichnet, dass** zwischen zwei Verbindungen des Fernsehempfängers mit dem Netz der Inhalt einer Netzinformationstabelle modifiziert wird, um die Zuordnung einer speziellen Taste der Fernbedienung, welche zu einer ersten Zeit einem ersten speziellen Befehl zugeordnet ist, zu modifizieren, damit zu einer zweiten Zeit besagte spezielle Taste einem zweiten speziellen Befehl zugeordnet ist, wobei die speziellen Befehle von dem Netz geliefert werden.
